# EUROPÄISCHE PATENTSCHRIFT

(11) **EP 2 493 734 B1**
(45) Veröffentlichungstag und Bekanntmachung des Hinweises auf die Patenterteilung: **25.02.2015**
(21) Anmeldenummer: 10752789.7
(22) Anmeldetag: 07.09.2010
(51) Int. Cl.: B60T 8/36, F16K 31/06

(54) **VENTILEINSATZ FÜR EINE VENTILPATRONE, KORRESPONDIERENDE VENTILPATRONE FÜR EIN MAGNETVENTIL, MAGNETVENTIL MIT EINER DERARTIGEN VENTILPATRONE UND VERFAHREN ZUR HERSTELLUNG EINES VENTILEINSATZES**
VALVE INSERT FOR A VALVE CARTRIDGE, CORRESPONDING VALVE CARTRIDGE FOR A SOLENOID VALVE, SOLENOID VALVE HAVING SAID VALVE CARTRIDGE AND METHOD FOR PRODUCING A VALVE INSERT
INSERT DE VANNE POUR CARTOUCHE DE VANNE, CARTOUCHE DE VANNE CORRESPONDANTE POUR ÉLECTROVANNE, ÉLECTROVANNE POURVUE D'UNE TELLE CARTOUCHE DE VANNE ET PROCÉDÉ DE FABRICATION D'UN INSERT DE VANNE

(30) Priorität: 30.10.2009 DE 102009046202
(43) Veröffentlichungstag der Anmeldung: 05.09.2012
(73) Patentinhaber: Robert Bosch GmbH, 70442 Stuttgart (DE)
(72) Erfinder: DINERMAN, Michael, 74074 Heilbronn (DE); MUELLER, Friedrich, 87509 Immenstadt (DE); FRITZ, Anton, 87527 Ofterschwang (DE); FOERCH, Dirk, 74196 Neuenstadt/Stein (DE); FRICKE-SCHMIDT, Joerg, Charleston 29418-2906 (US); VIER, Elmar, 71691 Freiberg A.N. (DE)
(86) Internationale Anmeldenummer: PCT/EP2010/063085
(87) Internationale Veröffentlichungsnummer: WO 2011/051036

(56) Entgegenhaltungen:
- WO-A1-02/090806
- DE-A1-102007 053 134
- DE-U1- 20 312 048
- GB-A- 2 199 674
- JP-A- 2004 255 615
- US-A- 3 776 278

## Beschreibung

### Stand der Technik

Die Erfindung betrifft einen Ventileinsatz für eine Ventilpatrone nach der Gattung des unabhängigen Patentanspruchs 1, sowie eine zugehörige Ventilpatrone für ein Magnetventil, ein zugehöriges Magnetventil und ein Verfahren zur Herstellung eines Ventileinsatzes nach der Gattung des unabhängigen Patentanspruchs 6.

Aus dem Stand der Technik sind Magnetventile, insbesondere für Hydraulikaggregate bekannt, die beispielsweise in einem Antiblockiersystem (ABS) oder einem Antriebsschlupfregelsystem (ASR-System) oder einem elektronischen Stabilitätsprogrammsystem (ESP-System) eingesetzt werden können. Ein Magnetventil als technisches Bauteil dient dazu, den Ein- oder Auslass von Gasen oder Flüssigkeiten zu kontrollieren oder die Fließrichtung zu steuern bzw. zu regeln.

In der Offenlegungsschrift DE 10 2007 053 134 A1 werden beispielsweise eine Ventilpatrone für ein Magnetventil und ein zugehöriges Magnetventil mit einer solchen Ventilpatrone beschrieben. Die beschriebene Ventilpatrone umfasst eine Kapsel, einen innerhalb der Kapsel beweglich geführten Magnetanker, einen Ventileinsatz, der mit einem ersten Ende in die Kapsel eingeschoben ist und einen Ventilkörper, der in ein zweites Ende des Ventileinsatzes eingepresst ist und einen Hauptventilsitz aufweist. Der von einer erzeugten Magnetkraft bewegte Magnetanker bewegt einen innerhalb des Ventileinsatzes geführten Stößel, der ein Schließelement mit einem Dichtelement aufweist, wobei das Dichtelement zur Ausführung einer Dichtfunktion dichtend in den Hauptventilsitz des Ventilkörpers eintaucht. Hierbei ist der Ventileinsatz als einteilige geschlitzte Hülse ausgeführt, und der Ventilkörper ist als haubenförmige Hülse ausgeführt. Der als Hülse ausgeführte Ventilköper ist so in ein zweites Ende des als geschlitzte Hülse ausgeführten Ventileinsatzes eingepresst, dass der Hauptventilsitz innerhalb des Ventileinsatzes angeordnet ist. Der als einteilige geschlitzte Hülse ausgeführte Ventileinsatz kann beispielsweise durch Einrollen eines Blechstreifens hergestellt werden, und der Ventilkörper kann beispielsweise als haubenförmiges Tiefziehteil hergestellt werden. In Ausgestaltung der Ventilpatrone kann eine spätere Form einer Innenbohrung des Ventileinsatzes vor dem Einrollen in eine korrespondierende Oberfläche des Blechstreifens eingebracht werden. Dies ermöglicht, dass beliebige günstige Formen für eine Volumenausgleichsnut durch einfache Bearbeitung der korrespondierenden Oberfläche des Blechstreifens vor dem Einrollen eingearbeitet werden können. Der Ventileinsatz des Magnetventils besitzt eine oder mehrere als Zu- bzw. Abströmöffnungen ausgeführt Radialbohrungen. Diese Bohrungen haben die Funktion, in einem geöffneten Ventilzustand einen bestimmten Volumenstrom, je nach Auslegung und Arbeitspunkt des Magnetventils, durchzulassen. Für die Durchflussmenge ist die Bohrungsquerschnittsgröße von wesentlicher Bedeutung.

Im Patent US 3,776, 278 wird ein manuelles Gasventil mit einem Ventileinsatz beschrieben, welcher als einteilige Hülse ausgeführt ist, welche Längsschlitze oder Radialbohrungen als Zu- oder Abströmungsöffnung eines Fluidstroms aufweist.

In der Offenlegungsschrift WO 02/090806 wird ein manuelles Fluidventil mit einem Ventileinsatz beschrieben, welcher als einteilige Hülse ausgeführt ist, welche Radialbohrungen als Zu- oder Abströmungsöffnung eines Fluidstroms aufweist, wobei die Querschnitte der Radialbohrungen ausgehend von konstanten Querschnitten am inneren Rand des als Hülse ausgeführten Ventileinsatz bis zum äußeren Rand kontinuierlich zunehmen.

### Offenbarung der Erfindung

Der erfindungsgemäße Ventileinsatz für eine Ventilpatrone eines Magnetventils mit den Merkmalen des unabhängigen Patentanspruchs 1 hat demgegenüber den Vorteil, dass mindestens eine als Radialbohrung ausgeführte Zu- und/oder Abströmungsöffnung des Ventileinsatzes für einen Fluidstrom mit einer trompetenförmigen Geometrie ausgebildet ist, um die Strömungscharakteristik des Fluidstroms gezielt zu beeinflussen. Hierbei ist der Ventileinsatz als einteilige geschlitzte Hülse aus einem Blechstreifen hergestellt.

Erfindungsgemäß ist ein wirksamer Querschnitt der mindestens einen Radialbohrung in Richtung des Fluidstroms in einem Einströmbereich bis zu einer Engstelle kontinuierlich verengt und in einem Ausströmbereich ausgehend von der Engstelle kontinuierlich aufgeweitet. Die Form der Radialbohrung beeinflusst die Strömungscharakteristik, so dass die trompetenförmige Geometrie der als Zu- bzw. Abströmöffnung ausgeführten Radialbohrung geometrisch an die Form einer Lavaldüse angenähert wird. Aufgrund des verbesserten Strömungsführungsverhaltens kann die Ventilakustik, infolge der Änderung der Strömungsgeschwindigkeit innerhalb der erzeugten trompetenförmigen Geometrie in der als Zu- bzw. Abströmöffnung ausgeführten Radialbohrung positiv beeinflusst werden.

Der erfindungsgemäße Ventileinsatz kann in einer Ventilpatrone bzw. einem Magnetventil eingesetzt werden, um die Fluidströmungscharakteristik in vorteilhafter Weise gezielt zu beeinflussen.

Das erfindungsgemäße Verfahren zur Herstellung eines Ventileinsatzes für eine Ventilpatrone eines Magnetventils mit den Merkmalen des unabhängigen Patentanspruchs 6 hat demgegenüber den Vorteil, dass in einen Blechstreifen mindestens eine Bohrung eingebracht wird, und mindestens ein Randbereich der mindestens einen Bohrung in Abhängigkeit von einer gewünschten Strömungscharakteristik durch einen Präge- und/oder Zerspanvorgang so umgeformt wird, dass nach einem Umformungsvorgang des Blechstreifens zur geschlitzten Hülse für die mindestens eine Bohrung eine trompetenförmige Geometrie ausgebildet wird.

Durch Ausführungsformen der Erfindung ist die gezielte Beeinflussung der Fluidströmungsführung bzw. des Fluidströmungsverhaltens durch Erzeugung einer Radialbohrung im Ventileinsatz mit einer trompetenförmigen Geometrie möglich, die eine Ähnlichkeit zur Form einer Lavaldüse aufweist. Die trompetenförmige Geometrie der Radialbohrung kann beispielsweise mittels Stanzen, Ausschneidens, Bohren oder Lochen, mit einer Prägung und/oder Zerspanung einer Kantenfase oder Kantenrundung der korrespondierenden Radialbohrung und durch das anschließende Umformen des Blechstreifens zur geschlitzten Hülse durch Biegen oder Rollieren o.ä. hergestellt werden. Durch Ausführungsformen der Erfindung kann die Qualität der Druckmodulation und die Akustik bei der Ausführung der zugeordneten Funktionen in vorteilhafter Weise verbessert werden. Bei einem hydraulischen Medium kann die Selbstentlüftungseigenschaft des korrespondierenden Magnetventils verbessert werden, wodurch durch Ausgasen von während des Betriebs gebildeten Luft-/Gasblasen entstehende Schwingungen und Geräusche reduziert bzw. eliminiert werden können. Allgemein kann bei hydraulischen und pneumatischen Magnetventilen die Fluidströmungsführung durch die erfindungsgemäße Beeinflussung des Strömungswiderstand und der Strömungsart sowie durch Erzeugen einer Drucksteigerung vor der Radialbohrung bzw. eines Druckabfalls nach der Radialbohrung optimiert und die Magnetventilakustik verbessert werden. Zusammenfassend liegen die Vorteile der Erfindung in der verbesserten Entlüftungseigenschaft, im verbesserten Schwingungsverhalten, in der verbesserten Akustik des Magnetventils sowie in einer optimierten Magnetventilfunktion durch die trompetenförmige Geometrie der als Radialbohrungen ausgeführten Zu- bzw. Abströmöffnungen.

Durch die in den abhängigen Ansprüchen aufgeführten Maßnahmen und Weiterbildungen sind vorteilhafte Verbesserungen des im unabhängigen Patentanspruch 1 angegebenen Ventileinsatzes und des im unabhängigen Patentanspruch 6 angegebenen Verfahren zur Herstellung eines Ventileinsatzes möglich.

In Ausgestaltung des erfindungsgemäßen Ventileinsatz ist eine Länge des Einströmbereichs bis zur Engstelle kürzer als die Länge des Ausströmbereichs ausgehend von der Engstelle ausgeführt, um den Fluidstrom zu beschleunigen, ohne dass es zu starken Verdichtungsstößen kommt. Alternativ ist eine Länge des Einströmbereichs bis zur Engstelle länger als die Länge des Ausströmbereichs ausgehend von der Engstelle ausgeführt, um den Fluidstrom abzubremsen. Im Fall der erwünschten Fluidströmungsverzögerung kann die Fluidströmung durch den Verdichtungsstoß gebremst werden und in Abhängigkeit von der Ventilanwendung kann ein verzögerter Druckaufbau oder Druckabbau erzielt werden. Durch die Änderung der Strömungsgeschwindigkeit innerhalb der als Zu- bzw. Abströmöffnung ausgeführten Radialbohrung kann ein Unterdruck so erzeugt werden, dass eventuell gebildete Luft- bzw. Gasblasen im Magnetventil infolge der daraus resultierenden Druckdifferenz durch die Radialbohrungen aus dem Magnetventil abgeführt werden.

In Ausgestaltung des erfindungsgemäßen Verfahrens werden Art und/oder Parameter zum Einbringen der mindestens einen Bohrung in den Blechstreifen in Abhängigkeit von der zu erzeugenden trompetenförmigen Geometrie der mindestens einen Bohrung durch eine ausgewählte Werkzeugform bestimmt. Die mindestens eine Bohrung kann beispielsweise durch Stanzen, Lochen, Ausschneiden oder Bohren in den Blechstreifen eingebracht werden, wobei durch die Geometrie des verwendeten Werkzeugs für die mindestens eine Bohrung beispielsweise eine gerade, ovale, konische usw. Form vorgegeben werden kann.

In weiterer Ausgestaltung des erfindungsgemäßen Verfahrens werden Art und/oder Parameter des Präge- und/oder Zerspanvorgangs in Abhängigkeit von der zu erzeugenden trompetenförmigen Geometrie der mindestens einen Bohrung durch eine ausgewählte Werkzeugform bestimmt. In Abhängigkeit von der Auslegung der gewünschten trompetenförmigen Geometrie der mindestens einen Bohrung können die Prägungs- und/oder Zerspanungstiefe und/oder die Prägungs- und/oder Zerspanungsform vorgegeben werden. So kann durch den Präge- und/oder Zerspanvorgang beispielsweise eine Fase oder eine Rundung an den Bohrungskantenbereichen angebracht werden. Hierbei kann der Blechstreifen im Bereich der Bohrung je nach Variante der Trompetenform sowohl einseitig als auch beidseitig umgeformt werden.

In weiterer Ausgestaltung des erfindungsgemäßen Verfahrens werden Art und Parameter des Umformvorgangs zur geschlitzten Hülse in Abhängigkeit von der zu erzeugenden trompetenförmigen Geometrie der mindestens einen Bohrung durch eine ausgewählte Werkzeugform bestimmt. Die Umformung des Blechstreifens zur geschlitzten Hülse kann beispielsweise durch Rollieren oder Umbiegen o.ä. erzeugt werden.

Zusammenfassend können durch entsprechende Werkzeugformen nahezu beliebige Variationen der Trompetenform für die mindestens eine Radialbohrung im Ventileinsatz des Magnetventils gezielt erzeugt werden, um die Fluidströmung gezielt zu beeinflussen.

Der erfindungsgemäße Ventileinsatz mit mindestens einer trompetenförmigen Radialbohrung, kann beispielsweise in stromlos offenen oder geschlossenen Magnetventilen verwendet werden.

Vorteilhafte Ausführungsformen der Erfindung sind in den Zeichnungen dargestellt und werden nachfolgend beschrieben. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische Schnittdarstellung eines Ausführungsbeispiels einer erfindungsgemäßen Ventilpatrone für ein Magnetventil.
Fig. 2 zeigt eine schematische Perspektivdarstellung eines erfindungsgemäßen Ventileinsatzes für die Ventilpatrone gemäß Fig. 1.
Fig. 3 zeigt eine schematische Querschnittdarstellung des Ventileinsatzes gemäß Fig. 2.
Fig. 4 zeigt eine schematische Darstellung eines Details aus Fig. 3.
Fig. 5 bis 7 zeigen verschiedene Stufen eines Ausführungsbeispiels eines Verfahrens zur Herstellung des Ventileinsatzes gemäß Fig. 1 bis 4 für die Ventilpatrone gemäß Fig. 1.

### Ausführungsformen der Erfindung

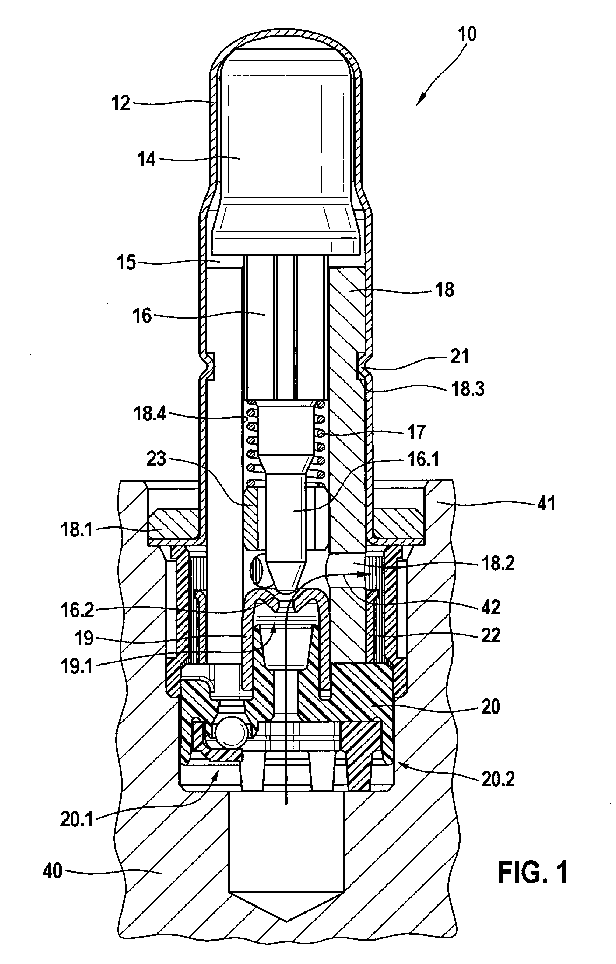

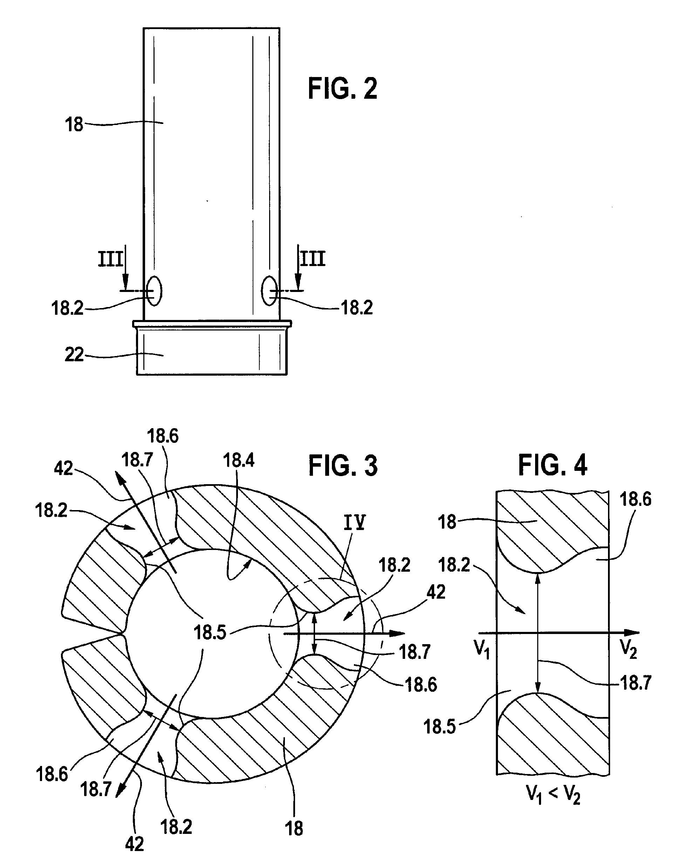

Wie aus Fig. 1 ersichtlich ist, umfasst ein Ausführungsbeispiel einer erfindungsgemäßen Ventilpatrone 10 für ein Magnetventil eine Kapsel 12, einen innerhalb der Kapsel 12 beweglich geführten Magnetanker 14, einen erfindungsgemäßen Ventileinsatz 18, der mit einem ersten Ende in die Kapsel 12 eingeschoben ist und nachfolgend unter Bezugnahme auf Fig. 2 bis 4 im Detail beschrieben wird, und einen Ventilkörper 19 mit einem Hauptventilsitz 19.1. Innerhalb des Ventileinsatzes 18 ist ein Stößel 16 längsbeweglich geführt, der ein Schließelement 16.1 mit einem Dichtelement 16.2 aufweist, das zur Ausführung einer Dichtfunktion dichtend in den Hauptventilsitz 19.1 des Ventilkörpers 19 eintaucht. Der Stößel 16 kann von dem Magnetanker 14 gegen die Kraft einer Rückstellfeder 17 innerhalb des Ventileinsatzes 18 bewegt werden, wobei der Magnetanker 14 von einer Magnetkraft bewegt wird, die von einer nicht dargestellten Magnetbaugruppe erzeugt wird.

Wie aus Fig. 1 weiter ersichtlich ist, ist die Kapsel 12 als zur Atmosphäre hin dichtendes Ventilbauteil in Richtung Verstemmbereich 41 mit einem Fluidblock 40 verlängert ausgeführt. Daher werden die Verstemmkräfte nicht vom Ventileinsatz 18, sondern von einer Verstemmbuchse 18.1 aufgenommen. Im dargestellten Ausführungsbeispiel der erfindungsgemäßen Ventilpatrone kann ein maximaler Hub des Stößels 16 durch ein axiales Verschieben des Ventileinsatzes 18 innerhalb der Kapsel 12 eingestellt werden. Ein minimaler Luftspalt 15 zwischen dem Magnetanker 14 und dem Ventileinsatz 18 kann durch axiales Verschieben des Ventilkörpers 19 innerhalb des Ventileinsatzes 18 mit eingelegtem Anker 14 eingestellt werden. Der eingestellte Luftspalt 15 kann durch eine Crimpverbindung 21 zwischen der Kapsel 12 und dem Ventileinsatz 18 festgelegt werden, wobei der Ventileinsatz 18 zur Herstellung der Crimpverbindung 21 mit einer umlaufenden Nut 18.3 ausgeführt werden kann. Somit wird durch die Crimpverbindung 21 sichergestellt, dass der Arbeitsluftspalt 15 erhalten bleibt, wobei zusätzlich die hydraulisch wirkenden Kräfte aufgenommen werden können. Die Rückstellfeder 17 für den Stößel 16 ist außerhalb des Strömungsbereichs angeordnet, wobei sich die Rückstellfeder 17 auf einer Federauflage 23 abstützt, die im dargestellten Ausführungsbeispiel als in den Ventileinsatz 18 eingeführte Spannhülse ausgeführt ist. Durch die Verlegung der Rückstellfeder 17 aus dem durchströmten Bauraum können der Verschleiß am Stößel 16 reduziert und der Durchfluss zwischen dem Hauptventilsitz 19.1 und entsprechenden in den Ventileinsatz 18 eingebrachten Radialbohrungen 18.2 erhöht werden.

Wie aus Fig. 1 weiter ersichtlich ist, ist der Ventilkörper 19 als haubenförmige Hülse ausgeführt. Der als Hülse ausgeführte Ventilköper 19 ist beispielsweise als Tiefziehteil ausgeführt und wird über einem Einpressbereich so in ein zweites Ende des als geschlitzte Hülse ausgeführten Ventileinsatzes 18 eingepresst, dass der Hauptventilsitz 19.1 innerhalb des Ventileinsatzes 18 angeordnet ist. Über einen Entkoppelbereich ist der Hauptventilsitz 19.1 im Ventilkörper 19 vom Einpressbereich entkoppelt, um eine Verformung des Hauptventilsitzes 19.1 durch den Einpressvorgang des Ventilkörpers 19 in den Ventileinsatz 18 zu verhindern. Die hydraulischen Kräfte werden von dem als geschlitzte Hülse ausgeführten Ventileinsatz 18 aufgenommen. Um ein Aufweiten des Ventileinsatzes 18 durch das Einpressen des Ventilkörpers 19 zu verhindern, ist im dargestellten Ausführungsbeispiel ein Armierungsring 22 auf das zweite Ende des Ventileinsatzes 18 aufgepresst. Der aufgepresste Armierungsring 22 vergrößert in vorteilhafter Weise die Gestaltfestigkeit des Ventileinsatzes 18 beim Einpressen des Ventilkörpers 19. Bei einer alternativen nicht dargestellten Ausführungsform der erfindungsgemäßen Ventilpatrone 10 können die Stöße des als geschlitzte Hülse ausführten Ventileinsatzes 18 mindestens am zweiten Ende des Ventileinsatzes 18 miteinander verbunden werden, um die Gestaltfestigkeit des Ventileinsatzes 18 beim Einpressen des Ventilkörpers 19 zu vergrößern. Die Stöße des als geschlitzte Hülse ausgeführten Ventileinsatzes 18 können beispielsweise durch Schweißen und/oder Kleben und/oder Verzahnen miteinander verbunden werden.

Wie weiter aus Figur 1 ersichtlich ist, ist ein als Kunststoffeinsatz ausgeführtes Ventilunterteil 20 axial an den Ventileinsatz 18 angelegt und abgestützt, wobei das Ventilunterteil 20 über einen Dom dichtend in einen Innenraum des Ventilkörpers 19 eingeschoben ist und mit der Außenkontur gegen den umgebenden Fluidblock 40 abdichtet. Zudem umfasst das dargestellte Ventilunterteil 20 ein exzentrisch angeordnetes Rückschlagventil 20.1, das eine richtungsorientierte Durchflussfunktion ausführt. Zusätzlich nimmt das Ventilunterteil 20 einen Flachfilter 20.2 auf.

Wie aus Fig. 1 bis 4 ersichtlich ist, ist der Ventileinsatz 18 als einteilige geschlitzte Hülse ausgeführt, welche drei symmetrisch am Umfang angeordnete, quer zum Ventileinsatz 19 liegende Radialbohrungen 18.2 als Abströmöffnungen und die Innenbohrung 18.4 als Zuströmöffnung umfasst. Die Radialbohrungen 18.2 haben die Funktion, in einem geöffneten Ventilzustand einen bestimmten Fluidvolumenstrom 42 in Abhängigkeit von der Auslegung und vom Arbeitspunkt des Magnetventils durchzulassen. Im dargestellten Ausführungsbeispiel weist die Innenbohrung 18.4 des Ventileinsatzes 18 eine nahezu vollkommene oder sehr stark angenäherte Kreisform auf, in welcher der Stößel 16 geführt wird. Im geöffneten Magnetventilzustand fließt die Fluidströmung 42 durch den Hauptventilsitz 19.1 und die als Radialbohrungen 18.2 ausgeführten Abströmöffnungen. Hierbei beeinflusst die Form der Radialbohrungen 18.2 die Strömungscharakteristik. Erfindungsgemäß sind die Radialbohrungen 18.2 jeweils mit einer trompetenförmigen Geometrie ausgebildet, um die Strömungscharakteristik des Fluidstroms 42 gezielt zu beeinflussen.

Wie Aus Fig. 3 und 4 weiter ersichtlich ist, ist ein wirksamer Querschnitt der jeweiligen Radialbohrung 18.2 in Richtung des Fluidstroms 42 in einem Einströmbereich 18.5 bis zu einer Engstelle 18.7 verengt und in einem Ausströmbereich 18.6 ausgehend von der Engstelle 18.7 aufgeweitet. Da eine Länge des Einströmbereichs 18.5 bis zur Engstelle 18.7 kürzer als die Länge des Ausströmbereichs 18.6 ausgehend von der Engstelle 18.7 ausgeführt ist, wird der Fluidstrom 42 von einer niedrigen ersten Geschwindigkeit V₁ auf eine höhere zweite Geschwindigkeit V₂ beschleunigt. Um den Fluidstrom 42 abzubremsen kann bei einer alternativen nicht dargestellten Ausführungsform die Länge des Einströmbereichs bis zur Engstelle länger als die Länge des Ausströmbereichs ausgehend von der Engstelle ausgeführt werden, wodurch die Strömung durch den Verdichtungsstoß gebremst wird und in Abhängigkeit von der Ventilanwendung ein verzögerter Druckaufbau oder Druckabbau erzielt werden kann. Durch die trompetenförmige Geometrie sind die Radialbohrungen 18.2 an die Form einer Lavaldüse angenähert. Somit kann die Fluidströmung beschleunigt oder abgebremst werden, ohne dass es zu starken Verdichtungsstößen kommt.

Durch die Änderung der Strömungsgeschwindigkeit innerhalb der Radialbohrungen 18.2 kann ein Unterdruck erzeugt werden, so dass eventuell innerhalb des Magnetventils gebildete Luft bzw. Gasblasen infolge der resultierenden Druckdifferenz durch die Radialbohrungen 18.2 aus dem Ventil abgeführt werden. Aufgrund des verbesserten Strömungsführungsverhaltens kann die Ventilakustik, infolge der Änderung der Strömungsgeschwindigkeit innerhalb der erzeugten Trompetenform in den Radialbohrungen 18.2 positiv beeinflusst werden. Ausführungsformen des erfindungsgemäßen Ventileinsatzes 18 ermöglichen eine Reduzierung bzw. Eliminierung der durch das mögliche Ausgasen der im Betrieb gebildeten Luft-/Gasblasen entstehenden Schwingungen und Geräusche und verbessern die Selbstentlüftungseigenschaft eines hydraulischen Magnetventils. Zudem kann die Fluidströmungsführung durch eine entsprechende Ausbildung der trompetenförmigen Geometrie der einzelnen Radialbohrungen 18.2 bei hydraulischen und/oder pneumatischen Magnetventilen beispielsweise durch eine Beeinflussung des Strömungswiderstands oder der Strömungsart (laminar/turbulent) oder durch einen Fluidverdichtungsstoß zur Drucksteigerung vor der Radialbohrung 18.2 oder durch eine Fluidexpansion (Lavaldüsen-Prinzip) zur Erzeugung eines Druckabfalls nach der Radialbohrung 18.2 optimiert und die Magnetventilakustik verbessert werden.

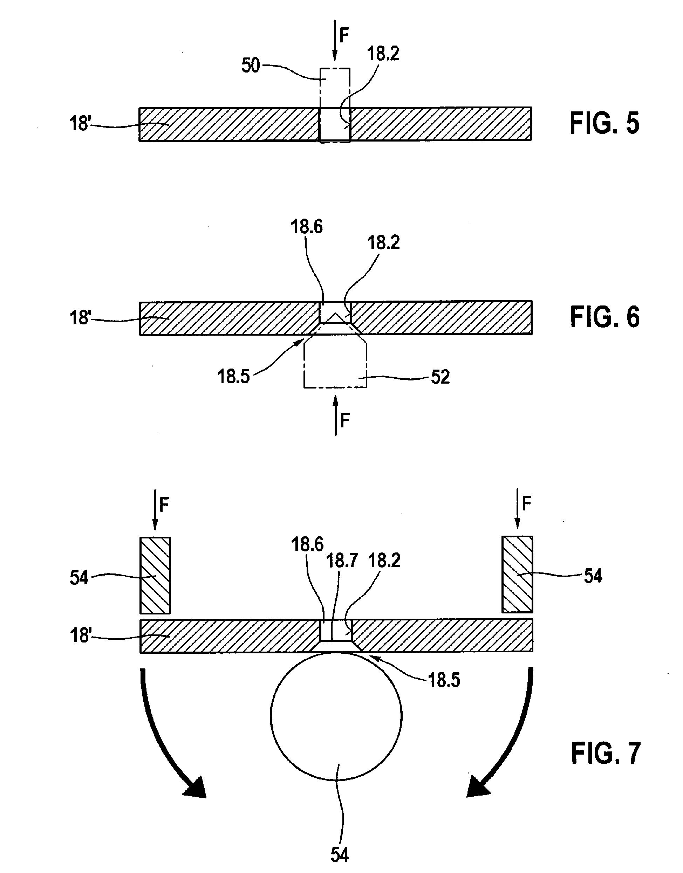

Der als einteilige geschlitzte Hülse ausgeführte Ventileinsatz 18 kann beispielsweise durch Einrollen eines Blechstreifens 18' hergestellt werden, wie nachfolgend unter Bezugnahme auf Fig. 5 bis 7 beschrieben wird. Zum Ausgleich des Volumens, das der Stößel 16 bei seiner durch den von der Magnetbaugruppe eingeleiteten Magnetfluss bewirkten Axialbewegung verdrängt, und zur Entlüftung bzw. Befüllung, ist in den Stößel 16 mindestens eine axial verlaufende Volumenausgleichsnut eingearbeitet. Alternativ kann die mindestens eine Volumenausgleichsnut jedoch auch in die Innenbohrung des Ventileinsatzes 18 eingearbeitet werden.

Wie aus Fig. 5 bis 7 ersichtlich ist wird zur Herstellung des erfindungsgemäßen Ventileinsatzes 18 in einen Blechstreifen 18' mindestens eine Bohrung 18.2 mit einem entsprechenden Bohrwerkzeug 50 eingebracht. Die mindestens eine Bohrung 18.2 kann beispielsweise durch Stanzen, Lochen, Ausschneiden oder Bohren in den Blechstreifen 18' eingebracht werden. Nach dem Einbringen der mindestens einen Bohrung 18.2 wird mindestens ein Randbereich der mindestens einen Bohrung 18.2 zur Bildung eines Einströmbereichs 18.5 und/oder eines Ausströmbereichs 18.6 in Abhängigkeit von einer gewünschten Strömungscharakteristik der mindestens einen Bohrung 18.2 durch einen Präge- und/oder Zerspanvorgang mit einem entsprechenden Präge- und/oder Zerspanwerkzeug 52 umgeformt. Durch den Präge- und/oder Zerspanvorgang kann beispielsweise eine Fase oder eine Rundung mit einer vorgegebenen Tiefe auf die Bohrungskanten zur Bildung des Einströmbereichs 18.5 und/oder des Ausströmbereichs 18.6 angebracht werden. Der Blechstreifen 18' kann im Bereich der mindestens einen Bohrung 18.2 in Abhängigkeit von der gewünschten trompetenförmigen Geometrie der mindestens einen Bohrung 18.2 sowohl einseitig als auch beidseitig umgeformt werden. Anschließend wird der Blechstreifen 18' durch einen Umformungsvorgang zur einteiligen geschlitzten Hülse 18 umgeformt, die mindestens eine Radialbohrung 18.2 mit einer trompetenförmigen Geometrie aufweist. Der Umformungsvorgang kann mittels entsprechenden Werkzeugen 54 beispielsweise durch Biegen oder Rollieren des Blechstreifen 18' ausgeführt werden.

Durch die gerade, ovale, konische Form des Werkzeugs zum Einbringen der mindestens einen Bohrung 18.2 in den Blechstreifen 18', durch die Form und Tiefe der Prägung und/oder Zerspanung wie auch durch die Art und Parameter des Umformverfahrens können nahezu beliebige Variationen der Trompetenform der mindestens einen Radialbohrung 18.2 am Ventileinsatz 18 der Ventilpatrone 10 des Magnetventils gezielt erzeugt werden.

Ausführungsformen der Erfindung ermöglichen in vorteilhafter Weise die gezielte Beeinflussung der Fluidströmungsführung bzw. des Fluidströmungsverhaltens durch die Ausbildung einer Radialbohrung im Ventileinsatz in Form einer "Trompete" mittels Stanzen, Ausschneiden, Bohren oder Lochen, mittels der Prägung und/oder Zerspanung einer Kantenfase oder Kantenrundung und mittels des anschließenden Umformens durch Biegen oder Rollieren des Blechstreifens. Die Vorteile der Erfindung liegen in den verbesserten Entlüftungseigenschaft, im verbesserten Schwingverhalten, in der verbesserten Akustik des Magnetventils sowie in einer optimierten Magnetventilsfunktion durch die erfindungsgemäße trompetenförmige Geometrie der Radialbohrungen.

## Patentansprüche

1. Ventileinsatz (18) für eine Ventilpatrone eines Magnetventils, wobei der Ventileinsatz (18) als einteilige geschlitzte Hülse aus einem Blechstreifen hergestellt ist und mindestens eine Radialbohrung (18.2) als Zu- oder Abströmungsöffnung eines Fluidstroms (42) aufweist, **dadurch gekennzeichnet, dass** die mindestens eine Radialbohrung (18.2) mit einer trompetenförmigen Geometrie ausgebildet ist, um die Strömungscharakteristik des Fluidstroms (42) gezielt zu beeinflussen, wobei der wirksame Querschnitt der mindestens einen Radialbohrung (18.2) in Richtung des Fluidstroms (42) in einem Einströmbereich (18.5) bis zu einer Engstelle (18.7) kontinuierlich verengt und in einem Ausströmbereich (18.6) ausgehend von der Engstelle (18.7) kontinuierlich aufgeweitet ist.

2. Ventileinsatz (18) nach Anspruch 1, **dadurch gekennzeichnet, dass** eine Länge des Einströmbereichs (18.5) bis zur Engstelle (18.7) kürzer als die Länge des Ausströmbereichs (18.6) ausgehend von der Engstelle (18.7) ausgeführt ist, um den Fluidstrom (42) zu beschleunigen.

3. Ventileinsatz (18) nach Anspruch 1, **dadurch gekennzeichnet, dass** eine Länge des Einströmbereichs (18.5) bis zur Engstelle (18.7) länger als die Länge des Ausströmbereichs (18.6) ausgehend von der Engstelle (18.7) ausgeführt ist, um den Fluidstrom (42) abzubremsen.

4. Ventilpatrone (10) für ein Magnetventil mit einer Kapsel (12), einem innerhalb der Kapsel (12) beweglich geführten Magnetanker (14), einem Ventileinsatz (18), der mit einem ersten Ende in die Kapsel (12) eingeschoben ist und als einteilige geschlitzte Hülse mit mindestens einer Radialbohrung (18.2) als Zu- und/oder Abströmungsöffnung eines Fluidstroms (42) ausgeführt ist, und einem Ventilkörper (19) mit einem Hauptventilsitz (19.1), wobei der von einer erzeugten Magnetkraft bewegte Magnetanker (14) einen innerhalb des Ventileinsatzes (18) geführten Stößel (16) bewegt, der ein Schließelement (16.1) mit einem Dichtelement (16.2) aufweist, und wobei das Dichtelement (16.2) zur Ausführung einer Dichtfunktion dichtend in den Hauptventilsitz (19.1) des Ventilkörpers (19) eintaucht, **dadurch gekennzeichnet, dass** der Ventileinsatz (18) nach einem der Ansprüche 1 bis 3 ausgeführt ist.

5. Magnetventil **gekennzeichnet durch** eine Ventilpatrone (10) nach Anspruch 4.

6. Verfahren zur Herstellung eines Ventileinsatzes (18) für eine Ventilpatrone eines Magnetventils, wobei in einen Blechstreifen (18') mindestens eine Bohrung (18.2) eingebracht wird und der Blechstreifen (18') anschießend zu einer einteiligen geschlitzten Hülse umgeformt wird, **dadurch gekennzeichnet, dass** mindestens ein Randbereich (18.5, 18.6) der mindestens einen Bohrung (18.2) in Abhängigkeit von einer gewünschten Strömungscharakteristik durch einen Präge- und/oder Zerspanvorgang umgeformt wird, um nach dem Umformungsvorgang zur geschlitzten Hülse die mindestens eine Bohrung (18.2) mit einer trompetenförmige Geometrie auszubilden, wobei der wirksame Querschnitt der mindestens einen Bohrung (18.2) in Richtung des Fluidstroms (42) in einem Einströmbereich (18.5) bis zu einer Engstelle (18.7) kontinuierlich verengt und in einem Ausströmbereich (18.6) ausgehend von der Engstelle (18.7) kontinuierlich aufgeweitet wird.

7. Verfahren nach Anspruch 6, **dadurch gekennzeichnet, dass** Art und/oder Parameter zum Einbringen der mindestens einen Bohrung (18.2) in den Blechstreifen (18') in Abhängigkeit von der zu erzeugenden trompetenförmigen Geometrie der mindestens einen Bohrung (18.2) durch eine ausgewählte Werkzeugform bestimmt werden.

8. Verfahren nach Anspruch 6 oder 7, **dadurch gekennzeichnet, dass** Art und/oder Parameter des Präge- und/oder Zerspanvorgangs in Abhängigkeit von der zu erzeugenden trompetenförmigen Geometrie der mindestens einen Bohrung (18.2) durch eine ausgewählte Werkzeugform bestimmt werden.

9. Verfahren nach einem der Ansprüche 6 bis 8, **dadurch gekennzeichnet, dass** Art und Parameter des Umformvorgangs zur geschlitzten Hülse in Abhängigkeit von der zu erzeugenden trompetenförmigen Geometrie der mindestens einen Bohrung (18.2) durch eine ausgewählte Werkzeugform bestimmt werden.

## Claims

1. Valve insert (18) for a valve cartridge of a solenoid valve, wherein the valve insert (18) is manufactured as a one-piece, slotted sleeve from a sheet metal strip and has at least one radial bore (18.2) as an inlet opening or discharge opening of a fluid stream (42), **characterized in that** the at least one radial bore (18.2) is embodied with a trumpet-shaped geometry, in order to selectively influence the flow characteristics of the fluid stream (42) wherein the effective cross section of the at least one radial bore (18.2) is continuously tapered in the direction of the fluid stream (42) in an inflow region (18.5) up to a constriction (18.7), and is continuously widened in an outflow region (18.6) starting from the constriction (18.7).

2. Valve insert (18) according to Claim 1, **characterized in that** a length of the inflow region (18.5) up to the constriction (18.7) is made shorter than the length of the outflow region (18.7) starting from the constriction (18.7), in order to accelerate the fluid stream (42).

3. Valve insert (18) according to Claim 1, **characterized in that** a length of the inflow region (18.5) up to the constriction (18.7) is made longer than the length of the outflow region (18.6) starting from the constriction (18.7), in order to slow down the fluid stream (42).

4. Valve cartridge (10) for a solenoid valve having a capsule (12), a magnet armature (14) which is movably guided within the capsule (12), a valve insert (18) which is inserted into the capsule (12) by a first end and is embodied as a one-piece, slotted sleeve with at least one radial bore (18.2) as an inflow opening and/or outflow opening of a fluid stream (42), and a valve body (19) with a main valve seat (19.1), wherein the magnet armature (14) which is moved by a generated magnetic force moves a plunger (16) which is guided within the valve insert (18) and which has a closing element (16.1) with a sealing element (16.2), and wherein the sealing element (16.2) dips in a seal-forming fashion into the main valve seat (19.1) of the valve body (19) in order to carry out a sealing function, **characterized in that** the valve insert (18) is embodied according to one of Claims 1 to 3.

5. Solenoid valve **characterized by** a valve cartridge (10) according to Claim 4.

6. Method for producing a valve insert (18) for a valve cartridge of a solenoid valve, wherein at least one bore (18.2) is formed in a sheet metal strip (18'), and the sheet metal strip (18') is subsequently shaped to form a one-piece, slotted sleeve, **characterized in that** at least one edge region (18.5, 18.6) of the at least one bore (18.2) is shaped by a stamping and/or cutting process as a function of a desired flow characteristic, in order to form the at least one bore (18.2) with a trumpet-shaped geometry after the shaping process for producing the slotted sleeve, wherein the effective cross section of the at least one radial bore (18.2) is continuously tapered in the direction of the fluid stream (42) in an inflow region (18.5) up to a constriction (18.7), and is continuously widened in an outflow region (18.6) starting from the constriction (18.7).

7. Method according to Claim 6, **characterized in that** the type and/or parameters for forming the at least one bore (18.2) in the sheet metal strip (18') are determined by a selected tool shape as a function of the trumpet-shaped geometry to be produced for the at least one bore (18.2).

8. Method according to Claim 6 or 7, **characterized in that** the type and/or parameters of the stamping process and/or cutting process are determined by a selected tool shape as a function of the trumpet-shaped geometry to be produced for the at least one bore (18.2).

9. Method according to one of Claims 6 to 8, **characterized in that** the type and parameters of the shaping process to produce the slotted sleeve are determined by a selected tool shape as a function of the trumpet-shaped geometry to be produced for the at least one bore (18.2).

## Revendications

1. Insert de vanne (18) pour une cartouche de vanne d'une électrovanne, dans lequel l'insert de vanne (18) est fabriqué sous forme de douille fendue en une seule pièce à partir d'une bande de tôle et présente au moins un alésage radial (18.2) comme orifice d'arrivée ou d'évacuation d'un courant de fluide (42), **caractérisé en ce que** ledit au moins un alésage radial (18.2) est réalisé avec une géométrie en forme de trompette, afin d'influencer de façon ciblée la caractéristique d'écoulement du courant de fluide (42), dans lequel la section transversale effective dudit au moins un alésage radial (18.2) se rétrécit en continu dans la direction du courant de fluide (42) dans une région d'entrée (18.5) jusqu'à un col (18.7) et s'évase en continu à partir du col (18.7) dans une région de sortie (18.6).

2. Insert de vanne (18) selon la revendication 1, **caractérisé en ce qu'**une longueur de la région d'entrée (18.5) jusqu'au col (18.7) est plus courte que la longueur de la région de sortie (18.6) à partir du col (18.7), afin d'accélérer le courant de fluide (42).

3. Insert de vanne (18) selon la revendication 1, **caractérisé en ce que** la longueur de la région d'entrée (18.5) jusqu'au col (18.7) est plus longue que la longueur de la région de sortie (18.6) à partir du col (18.7), afin de freiner le courant de fluide (42).

4. Cartouche de vanne (10) pour une électrovanne avec un capuchon (12), un induit magnétique (14) guidé en mouvement à l'intérieur du capuchon (12), un insert de vanne (18), qui est introduit dans le capuchon (12) avec une première extrémité et qui est réalisé sous la forme d'une douille fendue en une seule pièce avec au moins un alésage radial (18.2) comme orifice d'entrée et/ou d'évacuation d'un courant de fluide (42), et un corps de soupape (19) avec un siège de soupape principal (19.1), dans laquelle l'induit magnétique (14) déplacé par une force magnétique produite déplace un poussoir (16) guidé à l'intérieur de l'insert de vanne (18), et qui présente un élément de fermeture (16.1) avec un élément d'étanchéité (16.2), et dans laquelle l'élément d'étanchéité (16.2) plonge de façon étanche dans le siège de soupape principal (19.1) du corps de soupape (19) pour assurer une fonction d'étanchéité, **caractérisée en ce que** l'insert de vanne (18) est réalisé selon l'une des revendications 1 à 3.

5. Electrovanne **caractérisée par** une cartouche de vanne (10) selon la revendication 4.

6. Procédé de fabrication d'un insert de vanne (18) pour une cartouche de vanne d'une électrovanne, dans lequel on pratique au moins un alésage (18.2) dans une bande de tôle (18') et on déforme ensuite la bande de tôle (18') en une douille fendue en une seule pièce, **caractérisé en ce que** l'on déforme au moins une région de bord (18.5, 18.6) dudit au moins un alésage (18.2) par une opération d'estampage et/ou d'usinage en fonction d'une caractéristique d'écoulement désirée, afin de configurer, après l'opération de déformation en une douille fendue, ledit au moins un alésage (18.2) avec une géométrie en forme de trompette, dans lequel on rétrécit en continu la section transversale effective dudit au moins un alésage (18.2) dans la direction du courant de fluide (42) dans une région d'entrée (18.5) jusqu'à un col (18.7) et on l'évase en continu dans une région de sortie (18.6) à partir du col (18.7).

7. Procédé selon la revendication 6, **caractérisé en ce que** l'on détermine le type et/ou les paramètres pour la réalisation dudit au moins un alésage (18.2) dans la bande de tôle (18') en fonction de la géométrie en forme de trompette à produire dans ledit au moins un alésage (18.2) au moyen d'une forme d'outil sélectionnée.

8. Procédé selon la revendication 6 ou 7, **caractérisé en ce que** l'on détermine le type et/ou les paramètres de l'opération d'estampage et/ou d'usinage en fonction de la géométrie en forme de trompette à produire dans ledit au moins un alésage (18.2) au moyen d'une forme d'outil sélectionnée.

9. Procédé selon l'une des revendications 6 à 8, **caractérisé en ce que** l'on détermine le type et les paramètres de l'opération de déformation en une douille fendue en fonction de la géométrie en forme de trompette à produire dans ledit au moins un alésage (18.2) au moyen d'une forme d'outil sélectionnée.
